# EUROPÄISCHE PATENTANMELDUNG

(11) **EP 4 425 875 A1**
(43) Veröffentlichungstag der Anmeldung: **04.09.2024**
(21) Anmeldenummer: 23159159.5
(22) Anmeldetag: 28.02.2023
(51) Int. Cl.: H04L 45/02, H04L 45/03, H04L 45/18, H04L 45/00, H04L 45/48

(54) **VERFAHREN ZUR HOCHVERFÜGBAREN DATENÜBERMITTLUNG INNERHALB EINES KOMMUNIKATIONSSYSTEMS, KOMMUNIKATIONSSYSTEM UND KOMMUNIKATIONSGERÄT**

(71) Anmelder: Siemens Aktiengesellschaft, 80333 München (DE)
(72) Erfinder: Gedicke, Nils, 76751 Jockgrim (DE); Keskin, Faruk, 67065 Ludwigshafen am Rhein (DE); Neumann, Markus, 76189 Karlsruhe (DE)
(74) Vertreter: Siemens Patent Attorneys

(57) **Zusammenfassung**

Zur hochverfügbaren Datenübermittlung innerhalb eines Kommunikationssystems, das ein erstes und ein zweites Netzsegment umfasst, die über zumindest eine erste (1) und eine zweite Koppelstrecke (2) redundant miteinander verbunden sind, werden Nachrichten mit Nutzdaten innerhalb des ersten Netzsegments entsprechend einem Spannbaum-Protokoll übermittelt. Innerhalb des ersten Netzsegments werden Nachrichten (100) mit Topologie-Informationen weitergeleitet, die auch über die Koppelstrecken (1-2) und innerhalb des zweiten Netzsegments weitergeleitet werden. In einem fehlerfreien Zustand erfolgt eine Nutzdatenübermittlung zwischen den zwei Netzsegmenten nur über ein erstes Koppelgerät (104) des ersten Netzsegments und die erste Koppelstrecke (1). Ein Koppel-Port eines zweiten Koppelgeräts (105) wird bei einem Ausbleiben von über die zweite Koppelstecke (2) empfangenen Topologie-Informationen in einen Edge Port-Modus versetzt. Geräte (201-204) des zweiten Netzsegments löschen ihre jeweiligen MAC-Adresstabellen (210, 220, 230, 240) bei Empfang von über den Koppel-Port des zweiten Koppelgeräts (105) weitergeleiteten Topologie-Informationen.

## Beschreibung

Die vorliegende Erfindung betrifft ein Verfahren zur hochverfügbaren Datenübermittlung innerhalb eines Kommunikationssystems, insbesondere zur Übermittlung von Steuerungsdaten in einem industriellen Automatisierungssystem, ein zur Durchführung des Verfahrens geeignetes Kommunikationssystem sowie ein Kommunikationsgerät für das Kommunikationssystem, insbesondere einen Switch oder eine Bridge.

Ein industrielles Automatisierungssystem umfasst üblicherweise eine Vielzahl von über ein industrielles Kommunikationsnetz miteinander vernetzten Automatisierungsgeräten und dient im Rahmen einer Fertigungs- oder Prozessautomatisierung zur Steuerung oder Regelung von Anlagen, Maschinen bzw. Geräten. Aufgrund zeitkritischer Rahmenbedingungen in industriellen Automatisierungssystemen werden zur Kommunikation zwischen Automatisierungsgeräten überwiegend Echtzeit-Kommunikationsprotokolle, wie PROFINET, PROFIBUS, Real-Time-Ethernet oder Time-Sensitive Networking (TSN), verwendet.

Aufgrund einer Nutzung für häufig äußerst unterschiedliche Anwendungen können in Ethernet-basierten Kommunikationsnetzen beispielsweise Probleme entstehen, wenn Netzressourcen für eine Übermittlung von Datenströmen oder von Datenrahmen mit Echtzeitanforderungen konkurrierend für eine Übermittlung von Datenrahmen mit großem Nutzdateninhalt ohne spezielle Dienstgüteanforderungen beansprucht werden. Dies kann dazu führen, dass Datenströme oder Datenrahmen mit Echtzeitanforderungen nicht entsprechend einer angeforderten bzw. benötigten Dienstgüte übermittelt werden.

Aus US 8 284 658 B2 ist ein Verfahren zum Rekonfigurieren eines paketvermittelten Kommunikationsnetzes bekannt, das ein erstes Teilnetz und ein zweites Teilnetz umfasst. Während im ersten Teilnetz ein erstes Netzprotokoll verwendet wird, wird im zweiten Teilnetz ein vom ersten Netzprotokoll verschiedenes zweites Netzprotokoll verwendet. Beide Teilnetze sind durch wenigstens drei redundante Datenlinks miteinander verbunden, von denen jeweils nur einer zum Nutzdatenaustausch aktiviert ist. Dabei ist ein Master-Datenlink voreingestellt aktiviert, während mindestens zwei Slave-Datenlinks voreingestellt inaktiviert sind. Durch eine mit dem Master-Datenlink verbundene Master-Brücke des zweiten Teilnetzes wird ein Ausfall des Master-Datenlinks oder eines Slave-Datenlinks überwacht.

Bei einem solchen Ausfall generiert die Master-Brücke entsprechend US 8 284 658 B2 ein erstes Datenpaket und überträgt dieses an eine mit einem Slave-Datenlink verbundene Slave-Brücke des zweiten Teilnetzes. Die Slave-Brücke wird gemäß einer vorgebbaren Auswahlregel durch die Master-Brücke ausgewählt. Anschließend wird das erste Datenpaket durch die gewählte Slave-Brücke verarbeitet. Das erste Datenpaket umfasst logische Informationen, anhand derer eine zumindest teilweise Ausführung des ersten Netzprotokolls auf einem mit dem Slave-Datenlink verbundenen Port der Slave-Brücke und eine Aktivierung des Slave-Datenlinks durch das auf dem Port der Slave-Brücke ausgeführte erste Netzprotokoll erfolgt.

In EP 2 343 857 B1 ist ein Netzknoten für ein Kommunikationsnetz beschrieben, das ein erstes Teilnetz und ein mit diesem verbundenes zweites Teilnetz umfasst. Während im ersten Teilnetz ein Spannbaum-Protokoll verwendet wird, wird im zweiten Teilnetz ein sich vom Protokoll des ersten Teilnetzes unterscheidendes zweites Protokoll verwendet. Der Netzknoten ist als ein Element für das zweite Teilnetz eingerichtet und zur Kommunikation innerhalb des zweiten Teilnetzes ausgebildet. Darüber hinaus ist der Netzknoten mittels einer Spannbaum-Funktionalität als ein Spannbaum-Hauptknoten zur Überwachung und Steuerung des zweiten Teilnetzes ausgebildet und eingerichtet. Damit kann das zweite Teilnetz vom im ersten Teilnetz verwendeten Spannbaum-Protokoll als ein virtueller Netzknoten behandelt werden, indem der Netzknoten als Spannbaum-Hauptknoten für andere Netzknoten des zweiten Teilnetzes eine Spannbaum-Protokoll-Anwendung vornimmt.

EP 2 688 249 B1 betrifft ein Verfahren zur Nachrichtenübermittlung in einem redundant betreibbaren Kommunikationsnetz, das ein erstes Teilnetz mit Baumtopologie und ein zweites Teilnetz umfasst. Im ersten Teilnetz werden Nachrichten entsprechend einem Spannbaum-Protokoll übermittelt. Dabei tauschen Netzknoten des ersten Teilnetzes zugeordnete Kommunikationsgeräte zur Bildung einer Baumtopologie untereinander Nachrichten mit Topologieinformationen aus. Im zweiten Teilnetz werden Nachrichten entsprechend einem Parallel- oder Ringredundanz-Protokoll übermittelt. Netzknoten des zweiten Teilnetzes zugeordnete Kommunikationsgeräte tauschen untereinander Nachrichten mit Topologieinformationen des ersten Teilnetzes untereinander entsprechend dem Parallel- oder Ringredundanz-Protokoll aus und vergleichen diese mit lokal vorliegenden Topologieinformationen des ersten Teilnetzes. In Abhängigkeit von einem Vergleichsergebnis ermitteln die Netzknoten des zweiten Teilnetzes zugeordneten Kommunikationsgeräte resultierende Topologieinformationen des ersten Teilnetzes.

Aus EP 2 693 700 B1 ist ein Verfahren zur Nachrichtenübermittlung in einem redundant betreibbaren Kommunikationsnetz bekannt, das ein erstes Teilnetz mit Baumtopologie und ein zweites Teilnetz umfasst. Im ersten Teilnetz werden Nachrichten entsprechend einem Spannbaum-Protokoll übermittelt. Dabei tauschen Netzknoten des ersten Teilnetzes zugeordnete Kommunikationsgeräte zur Bildung einer Baumtopologie untereinander Nachrichten mit Topologieinformationen aus. Im zweiten Teilnetz werden Nachrichten entsprechend einem Parallel- oder Ringredundanz-Protokoll übermittelt. Als Wurzel-Netzknoten des ersten Teilnetzes wird ein virtueller Netzknoten konfiguriert, der über jeweils eine virtuelle nicht durch einen Fehler unterbrechbare Verbindung mit sämtlichen Netzknoten des zweiten Teilnetzes verbunden ist.

Bei einer redundanten Kopplung eines Nicht-Spanning Tree-Netzsegment an ein Spanning Tree-Netzsegment, die zumindest eine Haupt-Koppelstrecke und eine Reserve-Koppelstrecke umfasst, hat sich als vorteilhaft erwiesen, dass Bridge Protocol Data Units (BPDUs) des Spanning Tree-Netzsegments auch durch Switche bzw. Bridges des Nicht-Spanning Tree-Netzsegments weitergeleitet und ausgewertet werden. Insbesondere als Reaktion auf eine Topologieänderung im Spanning Tree-Netzsegment kann auf diese Weise angestoßen werden, dass die Bridges des Nicht-Spanning Tree-Netzsegments ihre jeweiligen MAC-Adresstabellen löschen, damit sie durch einen anschließenden Lernvorgang an die Topologieänderung angepasst werden.

Problematisch hierbei ist jedoch, dass ein Edge Port einer Spanning Tree Bridge an der Reserve-Koppelstrecke gemäß einschlägigem Standard IEEE 802.1 Q bei Ausfall der Haupt-Koppelstrecke nicht eigenständig eine Erzeugung einer Meldung über die entsprechende Topologieänderung veranlassen kann. Über den Edge Port der Spanning Tree Bridge werden beim Ausfall der Haupt-Koppelstrecke lediglich Topologieinformationen anderer Bridges und Nutzdaten weitergeleitet. Damit löschen die Bridges des Nicht-Spanning Tree-Netzsegments ihre jeweiligen MAC-Adresstabellen erst nach Ablauf einer für MAC-Adresseinträge vorgegebenen Aging Time und nicht unmittelbar nach dem Ausfall der Haupt-Koppelstrecke. Innerhalb der Aging Time sind somit veraltete Einträge in den MAC-Adresstabellen der Bridges des Nicht-Spanning Tree-Netzsegments gespeichert. Dies kann zu einer Unterbrechung einzelner Kommunikationsverbindung innerhalb des Nicht-Spanning Tree-Netzsegments führen. Grundsätzlich ließe sich dieses Problem durch eine proprietäre Spanning Tree-Protokollerweiterung lösen. Allerdings müssten sämtliche Geräte des Nicht-Spanning Tree-Netzsegments diese Protokollerweiterung unterstützen.

Der vorliegenden Erfindung liegt die Aufgabe zugrunde, ein Verfahren zur hochverfügbaren Datenübermittlung innerhalb eines Kommunikationssystems mit zwei Netzsegmenten anzugeben, das bei Verwendung eines Spannbaum-Protokolls in einem ersten Netzsegment und Ausfall einer Haupt-Koppelstecke zwischen dem ersten und einem zweiten Netzsegment eine schnelle Rekonfiguration des zweiten Netzsegments für eine Nutzung einer Reserve-Koppelstecke ermöglicht, sowie eine geeignete Implementierung zur Durchführung des Verfahrens zu schaffen.

Diese Aufgabe wird erfindungsgemäß durch ein Verfahren mit den in Anspruch 1 angegebenen Merkmalen, durch ein Kommunikationssystem mit den in Anspruch 14 angegebenen Merkmalen sowie durch ein Kommunikationsgerät mit den in Anspruch 15 angegebenen Merkmalen gelöst. Vorteilhafte Weiterbildungen der vorliegenden Erfindung sind in den abhängigen Ansprüchen angegeben.

Entsprechend dem erfindungsgemäßen Verfahren zur hochverfügbaren Datenübermittlung innerhalb eines Kommunikationssystems, das ein erstes und ein zweites Netzsegment umfasst, die über zumindest eine erste und eine zweite Koppelstrecke redundant miteinander verbunden sind, werden Nachrichten mit Nutzdaten nur innerhalb des ersten Netzsegments entsprechend einem Spannbaum-Protokoll übermittelt. Innerhalb des ersten Netzsegments werden ausgehend von einem als Root-Bridge betriebenen Gerät Nachrichten mit Topologie-Informationen, insbesondere Bridge Protocol Data Units (BPDUs), weitergeleitet, die Pfadkosten für eine Nutzdatenübermittlung zur Root-Bridge umfassen. Die Topologie-Informationen werden über die Koppelstrecken und innerhalb des zweiten Netzsegments weitergeleitet. Anhand der Topologie-Informationen konfigurieren Geräte des ersten Netzsegments ihre jeweiligen Ports für eine schleifenfreie Nutzdatenübermittlung.

Nachrichten mit Nutzdaten können innerhalb des zweiten Netzsegments insbesondere entsprechend einem Ring-, Medien- oder Parallelredundanz-Protokoll, wie High-availability Seamless Redundancy Protocol (HSR), Media Redundancy Protocol (MRP) oder Parallel Redundancy Protocol (PRP), übermittelt werden. Vorteilhafterweise werden die Nachrichten mit den Topologie-Informationen des ersten Netzsegments innerhalb des zweiten Netzsegments ausschließlich entsprechend dem Ring-, Medien- oder Parallelredundanz-Protokoll weitergeleitet. Die Geräte innerhalb des ersten Netzsegments konfigurieren ihre jeweiligen Ports vorzugsweise anhand der Topologie-Informationen für ein Blockieren einer Weiterleitung von Nutzdaten bzw. Topologie-Informationen, für die Weiterleitung von Nutzdaten bzw. Topologie-Informationen, für ein Lernen von MAC-Adressen bzw. für ein Erstellen von Weiterleitungsregeln.

Die Nutzdatenübermittlung zwischen den zwei Netzsegmenten erfolgt in einem fehlerfreien Zustand des Kommunikationssystems erfindungsgemäß nur über ein erstes Koppelgerät des ersten Netzsegments und die erste Koppelstrecke. Dabei wird ein der zweiten Koppelstrecke zugeordneter Koppel-Port eines zweiten Koppelgeräts des ersten Netzsegments für die Nutzdatenübermittlung und für die Weiterleitung der Topologie-Informationen im fehlerfreien Zustand blockiert. Vorzugsweise wird der Koppel-Port des zweiten Koppelgeräts des ersten Netzsegments im fehlerfreien Zustand für die Nutzdatenübermittlung und für die Weiterleitung der Topologie-Informationen entsprechend dem Spannbaum-Protokoll blockiert. Die Koppelstrecken und das zweite Netzsegment werden vorteilhafterweise bei einer Anwendung des Spannbaum-Protokolls im ersten Netzsegment insgesamt als ein einzelner Link zwischen dem ersten und dem zweiten Koppelgerät des ersten Netzsegments behandelt.

Der Koppel-Port des zweiten Koppelgeräts wird erfindungsgemäß bei einem Ausbleiben von über die zweite Koppelstecke empfangenen Topologie-Informationen nach einer vorgegebenen Dauer in einen Edge Port-Modus versetzt und für die Nutzdatenübermittlung über die zweite Koppelstrecke aktiviert. Über den Koppel-Port des zweiten Koppelgeräts werden im Edge Port-Modus insbesondere Topologie-Informationen weitergeleitet. Geräte des zweiten Netzsegments löschen bei Empfang von über den Koppel-Port des zweiten Koppelgeräts weitergeleiteten Topologie-Informationen ihre jeweiligen MAC-Adresstabellen. Dass die Topologie-Informationen über den Koppel-Port des zweiten Koppelgeräts weitergeleitet worden sind, ist beispielsweise anhand einer Quelladress-Angabe in einem Header eines Frames, der eine Bridge Protocol Data Unit (BPDU) umfasst, durch ein erstes Gerät des zweiten Netzsegments erkennbar, das diesen Frame direkt empfängt. Die Geräte des ersten bzw. zweiten Netzsegments sind bzw. umfassen insbesondere Switche bzw. Bridges.

Dadurch dass die Geräte des zweiten Netzsegments, insbesondere die Geräte an den Koppelstrecken, auswerten können, ob die Nachrichten mit den Topologie-Informationen über das erste Koppelgerät oder über das zweite Koppelgerät in das zweite Netzsegment weitergeleitet worden sind, kann eine Reaktion auf einen Ausfall der ersten Koppelstrecke schnell und vollständig konform zum angewendeten Spannbaum-Protokoll erfolgen. Eine Anwendung proprietärer Spannbaum-Protokollerweiterungen im ersten Netzsegment kann damit vermieden werden. Insbesondere erfolgt die Reaktion auf den Ausfall der ersten Koppelstrecke mit der vorliegenden Erfindung nicht erst nach Ablauf einer Aging Time für Einträge in MAC-Adresstabellen der Geräte des zweiten Netzsegments. Auf diese Weise ist eine zuverlässige Datenübermittlung bei Ausfall der ersten Koppelstrecke gewährleistet.

Entsprechend einer besonders bevorzugten Ausgestaltung der vorliegenden Erfindung ermitteln die Geräte des zweiten Netzsegments, insbesondere die Geräte an den Koppelstrecken, anhand der Nachrichten mit Topologie-Informationen jeweils, durch welches Koppelgerät des ersten Netzsegments die Topologie-Informationen zuletzt weitergeleitet worden sind. Dabei erfassen die Geräte des zweiten Netzsegments das Koppelgerät des ersten Netzsegments, von dem eine vorgegebene Anzahl an aufeinanderfolgend empfangenen Nachrichten mit Topologie-Informationen stammt, jeweils als aktiven Sender von Topologie-Informationen. Bei einer Änderung des aktiven Senders der Topologie-Informationen löschen vorteilhafterweise sämtliche Geräte des zweiten Netzsegments ihre jeweiligen MAC-Adresstabellen.

Zur Ermittlung des aktiven Senders der Topologie-Informationen erfassen die Geräte des zweiten Netzsegments vorteilhafterweise jeweils von den Nachrichten mit Topologie-Informationen umfasste Quell-MAC-Adressen. Beispielsweise erfassen die Geräte des zweiten Netzsegments das Koppelgerät des ersten Netzsegments, von dem 3 aufeinanderfolgend empfangene Nachrichten mit Topologie-Informationen stammen, jeweils als den aktiven Sender der Topologie-Informationen. Darüber hinaus berücksichtigen die Geräte des zweiten Netzsegments zur Ermittlung des aktiven Senders der Topologie-Informationen vorzugsweise jeweils nur Nachrichten mit Topologie-Informationen, in denen ein Proposal-Flag gesetzt ist. Auf diese Weise werden nur tatsächlich für die Ermittlung des aktiven Senders der Topologie-Informationen relevante Informationen ausgewertet.

Entsprechend einer weiteren Ausgestaltung der vorliegenden Erfindung wählen die Geräte des ersten Netzsegments anhand der Nachrichten mit den Topologie-Informationen untereinander das als Root-Bridge betriebene Gerät aus. Dabei umfassen die Topologie-Informationen Angaben zu bestehenden Links zwischen Geräten des ersten Netzsegments. Ausgehend von der Root-Bridge werden schleifenfreie Verbindungen zu den übrigen Geräten des ersten Netzsegments anhand einer Ermittlung minimaler Pfadkosten zur Root-Bridge aufgebaut. Vorzugsweise ist das Spannbaum-Protokoll das Rapid Spanning Tree Protocol. Dies ermöglicht eine besonders schnelle Rekonfiguration des Kommunikationssystems bei Topologie-Änderungen oder Link- oder Port-Ausfällen.

Das erfindungsgemäße Kommunikationssystem ist zur Durchführung eines Verfahrens entsprechend vorangehenden Ausführungen vorgesehen und umfasst ein erstes und ein zweites Netzsegment, die über zumindest eine erste und eine zweite Koppelstrecke redundant miteinander verbunden sind. Nur das erste Netzsegment ist dafür ausgestaltet und eingerichtet, dass Nachrichten mit Nutzdaten entsprechend einem Spannbaum-Protokoll übermittelt und ausgehend von einem als Root-Bridge betriebenen Gerät Nachrichten mit Topologie-Informationen weitergeleitet werden, die Pfadkosten für eine Nutzdatenübermittlung zur Root-Bridge umfassen. Außerdem ist das Kommunikationssystem dafür ausgestaltet und eingerichtet, dass die Topologie-Informationen über die Koppelstrecken und innerhalb des zweiten Netzsegments weitergeleitet werden. Des Weiteren sind Geräte des ersten Netzsegments dafür ausgestaltet und eingerichtet, dass ihre jeweiligen Ports für eine schleifenfreie Nutzdatenübermittlung anhand der Topologie-Informationen zu konfiguriert werden.

Ein erstes Koppelgerät des ersten Netzsegments ist erfindungsgemäß dafür ausgestaltet und eingerichtet, dass die Nutzdatenübermittlung zwischen den zwei Netzsegmenten in einem fehlerfreien Zustand des Kommunikationssystems nur über das erste Koppelgerät des ersten Netzsegments und die erste Koppelstrecke erfolgt. Demgegenüber ist ein zweites Koppelgerät des ersten Netzsegments dafür ausgestaltet und eingerichtet, einen der zweiten Koppelstrecke zugeordneten Koppel-Port des zweiten Koppelgeräts des ersten Netzsegments für die Nutzdatenübermittlung und für eine Weiterleitung der Topologie-Informationen im fehlerfreien Zustand zu blockieren.

Das zweite Koppelgerät des ersten Netzsegments ist erfindungsgemäß ferner dafür ausgestaltet und eingerichtet, dass der Koppel-Port des zweiten Koppelgeräts bei einem Ausbleiben von über die zweite Koppelstecke empfangenen Topologie-Informationen nach einer vorgegebenen Dauer in einen Edge Port-Modus versetzt und für die Nutzdatenübermittlung über die zweite Koppelstrecke aktiviert wird. Außerdem ist das zweite Koppelgerät des ersten Netzsegments ferner dafür ausgestaltet und eingerichtet, dass über den Koppel-Port des zweiten Koppelgeräts im Edge Port-Modus Topologie-Informationen weitergeleitet werden. Darüber hinaus sind Geräte des zweiten Netzsegments dafür ausgestaltet und eingerichtet, ihre jeweiligen MAC-Adresstabellen bei Empfang von über den Koppel-Port des zweiten Koppelgeräts weitergeleiteten Topologie-Informationen zu löschen.

Das erfindungsgemäße Kommunikationsgerät ist für ein Kommunikationssystem vorgesehen, das ein erstes und ein zweites Netzsegment umfasst, die über zumindest eine erste und eine zweite Koppelstrecke redundant miteinander verbunden sind, in dem Nachrichten mit Nutzdaten nur innerhalb des ersten Netzsegments entsprechend einem Spannbaum-Protokoll übermittelt werden, in dem eine Nutzdatenübermittlung zwischen den zwei Netzsegmenten in einem fehlerfreien Zustand des Kommunikationssystems nur über ein erstes Koppelgerät des ersten Netzsegments und die erste Koppelstrecke erfolgt und in dem ein der zweiten Koppelstrecke zugeordneter Koppel-Port eines zweiten Koppelgeräts des ersten Netzsegments für die Nutzdatenübermittlung und für eine Weiterleitung der Topologie-Informationen im fehlerfreien Zustand blockiert wird. Das Kommunikationsgerät ist dafür ausgestaltet und eingerichtet ist, seine MAC-Adresstabelle bei Empfang von über den Koppel-Port des zweiten Koppelgeräts weitergeleiteten Topologie-Informationen, die Pfadkosten für eine Nutzdatenübermittlung zur Root-Bridge umfassen, zu löschen.

Die vorliegende Erfindung wird nachfolgend an einem Ausführungsbeispiel anhand der Figur näher erläutert. Es zeigt
- Figur 1: ein Kommunikationssystem zur hochverfügbaren Datenübermittlung, das ein erstes und ein zweites Netzsegment umfasst, in einem fehlerfreien Zustand,
- Figur 2: das Kommunikationssystem gemäß Figur 1 nach einem Ausfall einer Haupt-Koppelstrecke zwischen dem ersten und dem zweiten Netzsegment.

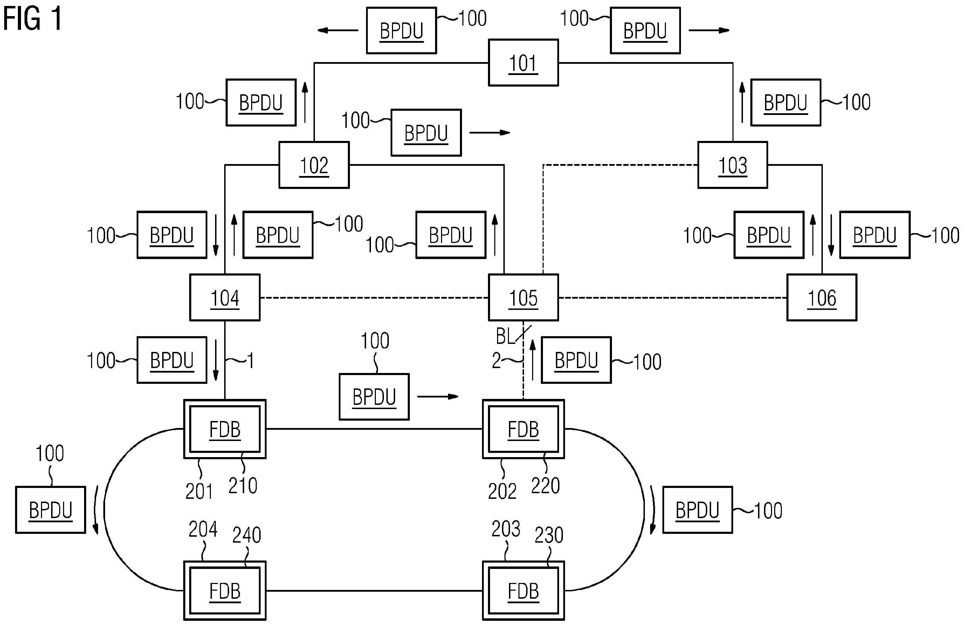

Das in Figur 1 dargestellte Kommunikationssystem umfasst ein erstes Netzsegment mit mehreren Switchen 101-106 und ein zweites Netzsegment mit mehreren Switchen 201-204. Das erste und das zweite Netzsegment sind über eine Haupt-Koppelstrecke 1 und eine Reserve-Koppelstrecke 2 redundant miteinander verbunden. Nachrichten mit Nutzdaten werden nur innerhalb des ersten Netzsegments entsprechend einem Spannbaum-Protokoll übermittelt. Im vorliegenden Ausführungsbeispiel werden die Nachrichten mit Nutzdaten entsprechend Rapid Spanning Tree Protocol (RSTP) innerhalb des ersten Netzsegments übermittelt. Details zum Rapid Spanning Tree Protocol sind dem Standard IEEE 802.1w zu entnehmen. Innerhalb des zweiten Netzsegments werden Nachrichten mit Nutzdaten entsprechend einem Ring-, Medien- oder Parallelredundanz-Protokoll übermittelt, beispielsweise High-availability Seamless Redundancy Protocol (HSR), Media Redundancy Protocol (MRP) oder Parallel Redundancy Protocol (PRP).

Innerhalb des ersten Netzsegments werden ausgehend von einem als Root-Bridge betriebenen Switch 101 Nachrichten 100 mit Topologie-Informationen weitergeleitet, die insbesondere Pfadkosten für eine Nutzdatenübermittlung zur Root-Bridge umfassen. Insbesondere umfassen die Topologie-Informationen Angaben zu bestehenden Links zwischen den Switchen 101-106 des ersten Netzsegments. Die Nachrichten 100 mit den Topologie-Informationen sind im vorliegenden Ausführungsbeispiel Bridge Protocol Data Units (BPDUs). Anhand der Nachrichten 100 mit den Topologie-Informationen wählen die Switche 101-106 des ersten Netzsegments untereinander den als Root-Bridge betriebenen Switch aus. Dies erfolgt beispielsweise anhand von den Switchen 101-106 jeweils zugeordneten Knotenidentifikatoren und Prioritäten.

Anhand der Nachrichten mit den Topologie-Informationen bzw. BPDUs 100 konfigurieren die Switche 101-106 des ersten Netzsegments ihre jeweiligen Ports für eine schleifenfreie Nutzdatenübermittlung. Dabei werden von der Root-Bridge 101 ausgehende schleifenfreie Verbindungen zu den übrigen Switchen 102-106 des ersten Netzsegments anhand einer Ermittlung minimaler Pfadkosten zur Root-Bridge 101 aufgebaut. Insbesondere konfigurieren die Switche 101-106 innerhalb des ersten Netzsegments ihre jeweiligen Ports anhand der BPDUs 100 für ein Blockieren einer Weiterleitung von Nutzdaten bzw. Topologie-Informationen, für die Weiterleitung von Nutzdaten bzw. Topologie-Informationen, für ein Lernen von MAC-Adressen und für ein Erstellen von Weiterleitungsregeln. Durch Konfiguration der Ports der Switche 101-106 werden innerhalb des ersten Netzsegments Links zwischen Switchen bzw. Netzknoten aktiviert oder deaktiviert. Deaktivierte Links sind in den Figu-ren durch gestrichelte Linien repräsentiert, während durchgezogene Linien aktivierte Links symbolisieren.

In einem fehlerfreien Zustand des Kommunikationssystems erfolgt die Nutzdatenübermittlung zwischen den zwei Netzsegmenten nur über einen ersten Koppel-Switch 104 des ersten Netzsegments und die Haupt-Koppelstrecke 1. Ein der Reserve-Koppelstrecke 2 zugeordneter Koppel-Port eines zweiten Koppel-Switches 105 des ersten Netzsegments wird im fehlerfreien Zustand für die Nutzdatenübermittlung und für die Weiterleitung der BPDUs 100 blockiert. Dabei wird der Koppel-Port des zweiten Koppel-Switches 105 des ersten Netzsegments für die Nutzdatenübermittlung und für die Weiterleitung der BPDUs 100 im fehlerfreien Zustand entsprechend dem Rapid Spanning Tree Protocol blockiert. Insbesondere werden die Koppelstrecken 1-2 und das zweite Netzsegment bei einer Anwendung des Rapid Spanning Tree Protocol im ersten Netzsegment insgesamt als ein einzelner Link zwischen dem ersten Koppel-Switch 104 und dem zweiten Koppel-Switch 105 des ersten Netzsegments behandelt.

Die BPDUs 100 werden auch über die Koppelstrecken 1-2 und innerhalb des zweiten Netzsegments weitergeleitet. Insbesondere werden die BPDUs 100 im fehlerfreien Zustand über den ersten Koppel-Switch 104 des ersten Netzsegments, die Haupt-Koppelstrecke 1, einen ersten Koppel-Switch 201 des zweiten Netzsegments, einen zweiten Koppel-Switch 202 des zweiten Netzsegments und die Reserve-Koppelstrecke 2 auch zum zweiten Koppel-Switch 105 des ersten Netzsegments weitergeleitet. Innerhalb des zweiten Netzsegments werden die BPDUs 100 ausschließlich entsprechend dem dort verwendeten Ring-, Medien- bzw. Parallelredundanz-Protokoll weitergeleitet.

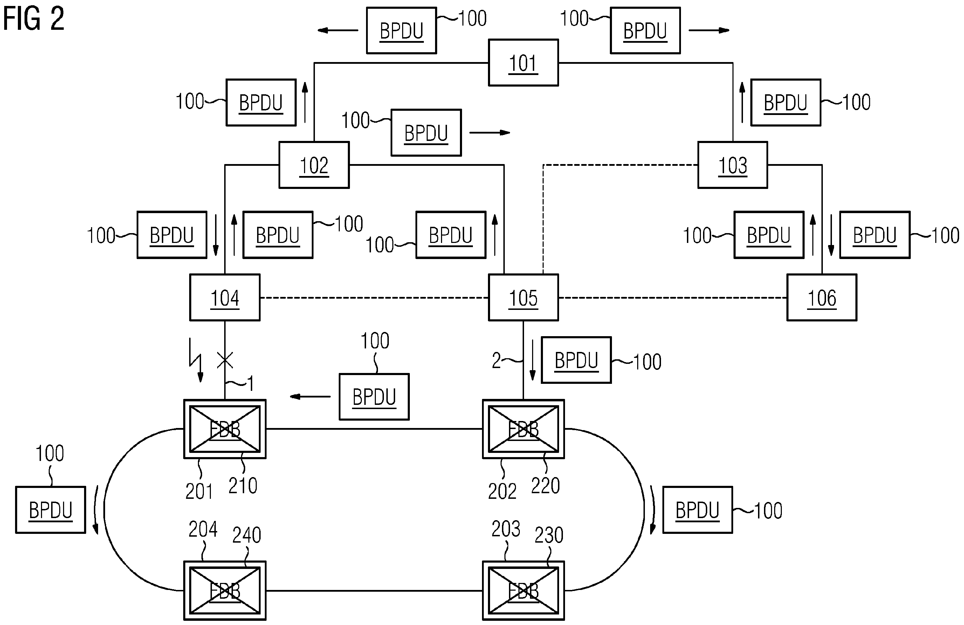

Entsprechend Figur 2 wird der Koppel-Port des zweiten Koppel-Switches 105 nach einem Ausfall der Haupt-Koppelstrecke 1 und bei einem dadurch bedingten Ausbleiben von über die Reserve-Koppelstecke 2 empfangenen BPDUs 100 nach einer vorgegebenen Dauer in einen Edge Port-Modus versetzt und für die Nutzdatenübermittlung über die Reserve-Koppelstrecke 2 aktiviert. Im Edge Port-Modus werden über den Koppel-Port des zweiten Koppel-Switches 105 BDPUs 100 in das zweite Netzsegment weitergeleitet. Die Switches 201-204 des zweiten Netzsegments, insbesondere die beiden Koppel-Switche 201-202, löschen bei Empfang von über den Koppel-Port des zweiten Koppel-Switches 105 des ersten Netzsegments weitergeleiteten BPDUs 100 ihre jeweiligen MAC-Adresstabellen 210, 220, 230, 240 bzw. Forwarding Databases (FDB).

Die Switche 201-204 des zweiten Netzsegments ermitteln anhand der BPDUs 100 jeweils, durch welchen Koppel-Switch 104-105 des ersten Netzsegments die BPDUs zuletzt weitergeleitet worden sind. Dabei erfassen die Switche 201-204 des zweiten Netzsegments den Koppel-Switch 104, 105 des ersten Netzsegments, von dem eine vorgegebene Anzahl an aufeinanderfolgend empfangenen BPDUs 100 stammt, jeweils als aktiven Sender von BPDUs 100. Im vorliegenden Ausführungsbeispiel erfassen die Switche 201-204 des zweiten Netzsegments den Koppel-Switch 104, 105 des ersten Netzsegments, von dem 3 aufeinanderfolgend empfangene BPDUs 100 stammen, jeweils als den aktiven Sender der BPDUs. Bei einer Änderung des aktiven Senders der BPDUs 100 löschen die Switche 201-204 des zweiten Netzsegments, insbesondere die beiden Koppel-Switche 201-202, ihre jeweiligen MAC-Adresstabellen 210, 220, 230, 240.

Darüber hinaus erfassen die Switche 201-204 des zweiten Netzsegments zur Ermittlung des aktiven Senders der BPDUs 100 vorteilhafterweise jeweils von den Nachrichten mit Topologie-Informationen umfasste Quell-MAC-Adressen. Vorzugsweise berücksichtigen die Switche 201-204 des zweiten Netzsegments zur Ermittlung des aktiven Senders der BPDUs jeweils nur Nachrichten mit Topologie-Informationen, in denen ein Proposal-Flag gesetzt ist.

## Patentansprüche

1. Verfahren zur hochverfügbaren Datenübermittlung innerhalb eines Kommunikationssystems, bei dem
- das Kommunikationssystem ein erstes und ein zweites Netzsegment umfasst, die über zumindest eine erste (1) und eine zweite Koppelstrecke (2) redundant miteinander verbunden sind,
- Nachrichten mit Nutzdaten nur innerhalb des ersten Netzsegments entsprechend einem Spannbaum-Protokoll übermittelt werden,
- innerhalb des ersten Netzsegments ausgehend von einem als Root-Bridge betriebenen Gerät (101) Nachrichten (100) mit Topologie-Informationen weitergeleitet werden, die Pfadkosten für eine Nutzdatenübermittlung zur Root-Bridge umfassen,
- die Topologie-Informationen über die Koppelstrecken (1-2) und innerhalb des zweiten Netzsegments weitergeleitet werden,
- Geräte (101-106) des ersten Netzsegments ihre jeweiligen Ports für eine schleifenfreie Nutzdatenübermittlung anhand der Topologie-Informationen konfigurieren,
- die Nutzdatenübermittlung zwischen den zwei Netzsegmenten in einem fehlerfreien Zustand des Kommunikationssystems nur über ein erstes Koppelgerät (104) des ersten Netzsegments und die erste Koppelstrecke (1) erfolgt,
- ein der zweiten Koppelstrecke (2) zugeordneter Koppel-Port eines zweiten Koppelgeräts (105) des ersten Netzsegments für die Nutzdatenübermittlung und für eine Weiterleitung der Topologie-Informationen im fehlerfreien Zustand blockiert wird,
- der Koppel-Port des zweiten Koppelgeräts (105) bei einem Ausbleiben von über die zweite Koppelstecke (2) empfangenen Topologie-Informationen nach einer vorgegebenen Dauer in einen Edge Port-Modus versetzt und für die Nutzdatenübermittlung über die zweite Koppelstrecke aktiviert wird,
- über den Koppel-Port des zweiten Koppelgeräts (105) im Edge Port-Modus Topologie-Informationen weitergeleitet werden,
- Geräte (201-204) des zweiten Netzsegments ihre jeweiligen MAC-Adresstabellen (210, 220, 230, 240) bei Empfang von über den Koppel-Port des zweiten Koppelgeräts (105) weitergeleiteten Topologie-Informationen löschen.

2. Verfahren nach Anspruch 1,
bei dem Nachrichten mit Nutzdaten innerhalb des zweiten Netzsegments entsprechend einem Ring-, Medien- oder Parallelredundanz-Protokoll übermittelt werden.

3. Verfahren nach Anspruch 2,
bei dem die Nachrichten mit den Topologie-Informationen des ersten Netzsegments innerhalb des zweiten Netzsegments ausschließlich entsprechend dem Ring-, Medien- oder Parallelredundanz-Protokoll weitergeleitet werden.

4. Verfahren nach einem der Ansprüche 1 bis 3,
bei dem die Geräte innerhalb des ersten Netzsegments ihre jeweiligen Ports anhand der Topologie-Informationen für ein Blockieren der Weiterleitung von Nutzdaten und/oder Topologie-Informationen, für die Weiterleitung von Nutzdaten und/oder Topologie-Informationen, für ein Lernen von MAC-Adressen und/oder für ein Erstellen von Weiterleitungsregeln konfigurieren.

5. Verfahren nach einem der Ansprüche 1 bis 4,
bei dem der Koppel-Port des zweiten Koppelgeräts des ersten Netzsegments für die Nutzdatenübermittlung und für die Weiterleitung der Topologie-Informationen im fehlerfreien Zustand entsprechend dem Spannbaum-Protokoll blockiert wird.

6. Verfahren nach einem der Ansprüche 1 bis 5,
bei dem die Geräte des zweiten Netzsegments anhand der Nachrichten mit Topologie-Informationen jeweils ermitteln, durch welches Koppelgerät des ersten Netzsegments die Topologie-Informationen zuletzt weitergeleitet worden sind, bei dem die Geräte des zweiten Netzsegments das Koppelgerät des ersten Netzsegments, von dem eine vorgegebene Anzahl an aufeinanderfolgend empfangenen Nachrichten mit Topologie-Informationen stammt, jeweils als aktiven Sender von Topologie-Informationen erfassen und bei dem die Geräte des zweiten Netzsegments ihre jeweiligen MAC-Adresstabellen bei einer Änderung des aktiven Senders der Topologie-Informationen löschen.

7. Verfahren nach Anspruch 6,
bei dem die Geräte des zweiten Netzsegments zur Ermittlung des aktiven Senders der Topologie-Informationen jeweils von den Nachrichten mit Topologie-Informationen umfasste Quell-MAC-Adressen erfassen.

8. Verfahren nach einem der Ansprüche 6 oder 7,
bei dem die Geräte des zweiten Netzsegments zur Ermittlung des aktiven Senders der Topologie-Informationen jeweils nur Nachrichten mit Topologie-Informationen berücksichtigen, in denen ein Proposal-Flag gesetzt ist.

9. Verfahren nach einem der Ansprüche 6 bis 8,
bei dem die Geräte des zweiten Netzsegments das Koppelgerät des ersten Netzsegments, von dem 3 aufeinanderfolgend empfangene Nachrichten mit Topologie-Informationen stammen, jeweils als den aktiven Sender der Topologie-Informationen erfassen.

10. Verfahren nach einem der Ansprüche 1 bis 9,
bei dem die Geräte des ersten Netzsegments anhand der Nachrichten mit den Topologie-Informationen untereinander das als Root-Bridge betriebene Gerät auswählen, bei dem die Topologie-Informationen Angaben zu bestehenden Links zwischen Geräten des ersten Netzsegments umfassen, bei dem von der Root-Bridge ausgehende schleifenfreie Verbindungen zu den übrigen Geräten des ersten Netzsegments anhand einer Ermittlung minimaler Pfadkosten zur Root-Bridge aufgebaut werden und bei dem das Spannbaum-Protokoll das Rapid Spanning Tree Protocol ist.

11. Verfahren nach Anspruch 10,
bei dem die Nachrichten mit den Topologie-Informationen Bridge Protocol Data Units sind.

12. Verfahren nach einem der Ansprüche 1 bis 11,
bei dem die Koppelstrecken und das zweite Netzsegment bei einer Anwendung des Spannbaum-Protokolls im ersten Netzsegment insgesamt als ein einzelner Link zwischen dem ersten und dem zweiten Koppelgerät des ersten Netzsegments behandelt werden.

13. Verfahren nach einem der Ansprüche 1 bis 12,
bei dem die Geräte des ersten und/oder zweiten Netzsegments Switches und/oder Bridges umfassen.

14. Kommunikationssystem zur hochverfügbaren Datenübermittlung mit
- einem ersten und einem zweiten Netzsegment, die über zumindest eine erste (1) und eine zweite Koppelstrecke (2) redundant miteinander verbunden sind,
- wobei nur das erste Netzsegment dafür ausgestaltet und eingerichtet ist, dass Nachrichten mit Nutzdaten entsprechend einem Spannbaum-Protokoll übermittelt und ausgehend von einem als Root-Bridge betriebenen Gerät (101) Nachrichten (100) mit Topologie-Informationen weitergeleitet werden, die Pfadkosten für eine Nutzdatenübermittlung zur Root-Bridge umfassen,
- wobei das Kommunikationssystem dafür ausgestaltet und eingerichtet ist, dass die Topologie-Informationen über die Koppelstrecken (1-2) und innerhalb des zweiten Netzsegments weitergeleitet werden,
- wobei Geräte (101-106) des ersten Netzsegments dafür ausgestaltet und eingerichtet sind, dass ihre jeweiligen Ports für eine schleifenfreie Nutzdatenübermittlung anhand der Topologie-Informationen zu konfiguriert werden,
- wobei ein erstes Koppelgerät (104) des ersten Netzsegments dafür ausgestaltet und eingerichtet ist, dass die Nutzdatenübermittlung zwischen den zwei Netzsegmenten in einem fehlerfreien Zustand des Kommunikationssystems nur über das erste Koppelgerät des ersten Netzsegments und die erste Koppelstrecke (1) erfolgt,
- wobei ein zweites Koppelgerät (105) des ersten Netzsegments dafür ausgestaltet und eingerichtet ist, einen der zweiten Koppelstrecke (2) zugeordneten Koppel-Port des zweiten Koppelgeräts des ersten Netzsegments für die Nutzdatenübermittlung und für eine Weiterleitung der Topologie-Informationen im fehlerfreien Zustand zu blockieren,
- wobei das zweite Koppelgerät (105) des ersten Netzsegments ferner dafür ausgestaltet und eingerichtet ist, dass der Koppel-Port des zweiten Koppelgeräts bei einem Ausbleiben von über die zweite Koppelstecke (2) empfangenen Topologie-Informationen nach einer vorgegebenen Dauer in einen Edge Port-Modus versetzt und für die Nutzdatenübermittlung über die zweite Koppelstrecke aktiviert wird,
- wobei das zweite Koppelgerät (105) des ersten Netzsegments ferner dafür ausgestaltet und eingerichtet ist, dass über den Koppel-Port des zweiten Koppelgeräts im Edge Port-Modus Topologie-Informationen weitergeleitet werden,
- wobei Geräte (201-204) des zweiten Netzsegments dafür ausgestaltet und eingerichtet sind, ihre jeweiligen MAC-Adresstabellen (210, 220, 230, 240) bei Empfang von über den Koppel-Port des zweiten Koppelgeräts (105) weitergeleiteten Topologie-Informationen zu löschen.

15. Kommunikationsgerät für ein Kommunikationssystem nach Anspruch 14,
- wobei das Kommunikationssystem ein erstes und ein zweites Netzsegment umfasst, die über zumindest eine erste und eine zweite Koppelstrecke redundant miteinander verbunden sind, Nachrichten mit Nutzdaten nur innerhalb des ersten Netzsegments entsprechend einem Spannbaum-Protokoll übermittelt werden, eine Nutzdatenübermittlung zwischen den zwei Netzsegmenten in einem fehlerfreien Zustand des Kommunikationssystems nur über ein erstes Koppelgerät des ersten Netzsegments und die erste Koppelstrecke erfolgt und ein der zweiten Koppelstrecke zugeordneter Koppel-Port eines zweiten Koppelgeräts des ersten Netzsegments für die Nutzdatenübermittlung und für eine Weiterleitung der Topologie-Informationen im fehlerfreien Zustand blockiert wird,
- wobei das Kommunikationsgerät dafür ausgestaltet und eingerichtet ist, seine MAC-Adresstabelle bei Empfang von über den Koppel-Port des zweiten Koppelgeräts weitergeleiteten Topologie-Informationen, die Pfadkosten für eine Nutzdatenübermittlung zur Root-Bridge umfassen, zu löschen.
